Europäisches Patentamt

European Patent Office

Office européen des brevets

(11) Numéro de publication: **0 417 020 A1**

## DEMANDE DE BREVET EUROPEEN

(21) Numéro de dépôt: **90440076.9**

(22) Date de dépôt: **05.09.90**

(51) Int. Cl.5: **G01M 17/00**

(30) Priorité: **05.09.89 FR 8911734**

(43) Date de publication de la demande:
**13.03.91 Bulletin 91/11**

(84) Etats contractants désignés:
**AT BE DE ES GB IT NL SE**

(71) Demandeur: **CLEMESSY Société Anonyme
18, rue de Thann
F-68200 Mulhouse(FR)**

(72) Inventeur: **Mahner, Pierre
80 rue de la Forêt, Gildwiller
F-68210 Dannemarie(FR)**

(74) Mandataire: **Metz, Paul
Cabinet METZ PATNI 63, rue de la Ganzau
F-67100 Strasbourg(FR)**

(54) **Banc de simulation et de contrôle de roulage pour un véhicule routier.**

(57) Banc caractérisé en ce qu'il comporte, pour chaque train de roues, un train de rouleaux (16) formé chacun de deux groupes de rouleaux (25) et (26) entraînés en bout d'arbre par l'arbre d'un même moteur électrique (27) et (28) à courant continu disposé en position centrale, et en ce que chaque rouleau est monté cinématiquement indépendant du rouleau homologue du même groupe de manière à pouvoir doser le couple appliqué sur l'un et l'autre rouleau d'un même groupe entraînant la même roue.

Cette invention intéresse les constructeurs d'automobiles et les laboratoires d'essai.

FIG. 1

EP 0 417 020 A1

La présente invention se rapporte à un banc de simulation et de contrôle du comportement routier d'un véhicule.

Après assemblage et diverses vérifications techniques et contrôles de qualité, les véhicules automobiles subissent un dernier contrôle global par un essai sur route. Cet essai permet notamment de vérifier le bon comportement routier du véhicule dans diverses configurations.

Pour supprimer les inconvénients des essais sur route : coût, danger d'ordre routier et de circulation, détériorations possibles des véhicules, salissures... les constructeurs ont étudié ou fait étudier des bancs de simulation permettant de vérifier en atelier les comportements routiers d'un véhicule nouvellement construit ou d'essayer et de modifier un prototype dans ses caractéristiques ou parties relatives au comportement routier.

Il s'agit des bancs à rouleaux dans lesquels un bâti porte, pour l'un ou l'autre ou les deux trains de roues du véhicule à tester, un ensemble moteur actionnant un train formé de deux paires de rouleaux à travers une liaison cinématique, par exemple à courroie.

Chaque paire de rouleaux est entraînée à la même vitesse à partir du même arbre moteur. La liaison par courroie permet d'obtenir la même vitesse pour chaque rouleau de chaque paire.

Or, l'écrasement du pneu dans sa zone de travail apporte une diminution locale du rayon de la roue.

Celle-ci ne présente plus la même vitesse périphérique aux deux zones de contact.

Cette vitesse différentielle provoque des glissements et des vibrations engendrant des mouvements parasites qui faussent les mesures et dénaturent le comportement réel du véhicule.

De plus, la roue constituant déjà une liaison cinématique entre les rouleaux ne réagit pas de la même façon que la courroie d'entraînement.

Or, de par sa vocation, un banc de contrôle et d'essai doit rendre le plus fidèlement possible le comportement réel du véhicule sur la route.

La présente invention a précisément pour but de remédier à cet inconvénient en proposant un banc parfaitement équilibré dont les rouleaux de chaque paire sont mécaniquement indépendants, la commande en vitesse et en couple s'effectuant au travers des machines électriques d'entraînement.

La séparation de l'entraînement de la roue sur deux zones d'appui permet une régulation de l'effort tangentiel indépendamment du rayon travaillant.

Par ailleurs, le couplage électrique des deux lignes de rouleaux réduit l'oscillation parasite du véhicule et procure une autonomie de mouvements propres à chaque ligne.

On peut citer de façon non limitative les avantages supplémentaires suivants :

. il n'existe pas de jumelage mécanique d'entraînement des rouleaux ;

. l'indépendance cinématique des rouleaux permet de réguler l'effort tangentiel sur chaque zone d'appui ou de les régler à des valeurs différentes ;

. on évite les torsions et les déformations des pièces intermédiaires en transmettant le couple total s'exerçant sur un train de roues par quatre arbres courts ;

. la présence de deux trains à écartement réglable permet de contrôler les véhicules à transmission intégrale dits "4x4" ;

. l'indépendance mécanique des rouleaux d'un même groupe permet leur écartement relatif et donc le réglage de pénétration de la roue pour un optimum de travail quelles que soient les différences de diamètre des roues ; en raison de deux zones de contact, on réduit l'effort d'entraînement au niveau de chaque zone en vue d'une meilleure approximation de la réalité ;

. la roue est "portée" par les rouleaux pour une moindre sollicitation de la suspension ;

. la présence d'un moteur central entre chaque ligne de rouleaux assure une construction compacte de plus faible encombrement au banc ; son encombrement total dépasse légèrement celui du véhicule ;

. la construction est facilitée par les modules monoblocs ne nécessitant aucune mise en ligne précise ;

. pose aisée par des bridages hydrauliques ;

. déplacement facile par une crémaillère et solidarisation dans une position de travail par bridage hydraulique ;

. arbres de transmission courts réduisant la longueur de la ligne d'accouplement mécanique ;

. roulement de balance du moteur électrique confondu avec le roulement de palier de chaque rouleau ;

. la présence de tiroirs élévateurs au dessus de chaque groupe de rouleaux augmente la sécurité d'utilisation ;

. performances sensiblement accrues permettant des contrôles à des vitesses supérieures à 200 km/h.

Les caractéristiques techniques et d'autres avantages de l'invention sont consignés dans la description qui suit, effectuée à titre d'exemple non limitatif sur un mode d'exécution en référence aux dessins accompagnants dans lesquels :

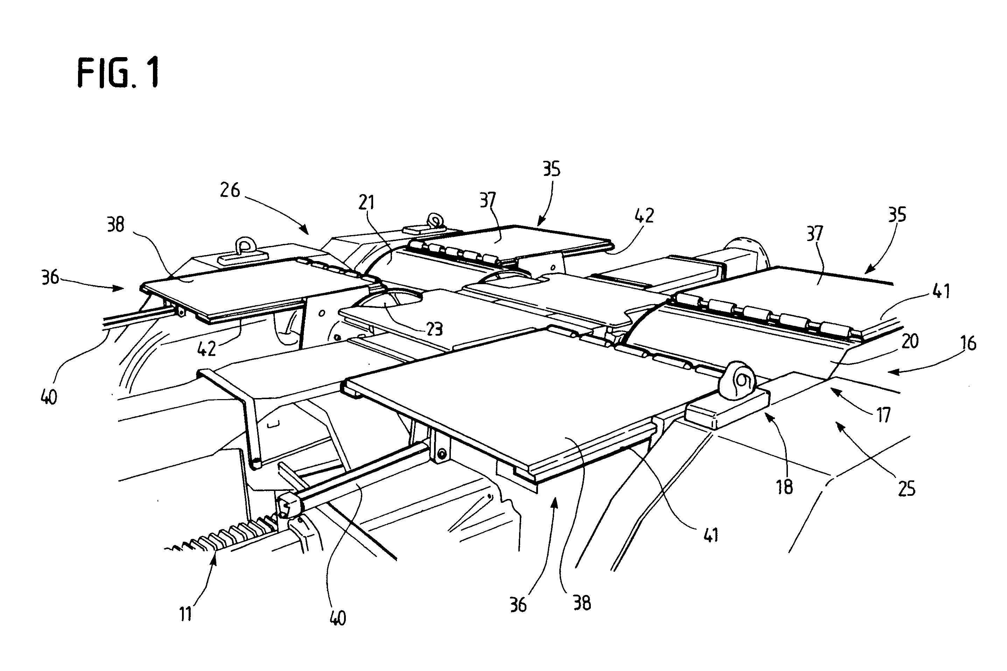

. la figure 1 est une vue simplifiée en perspective d'un de train de rouleaux composant le banc à rouleaux selon l'invention ;

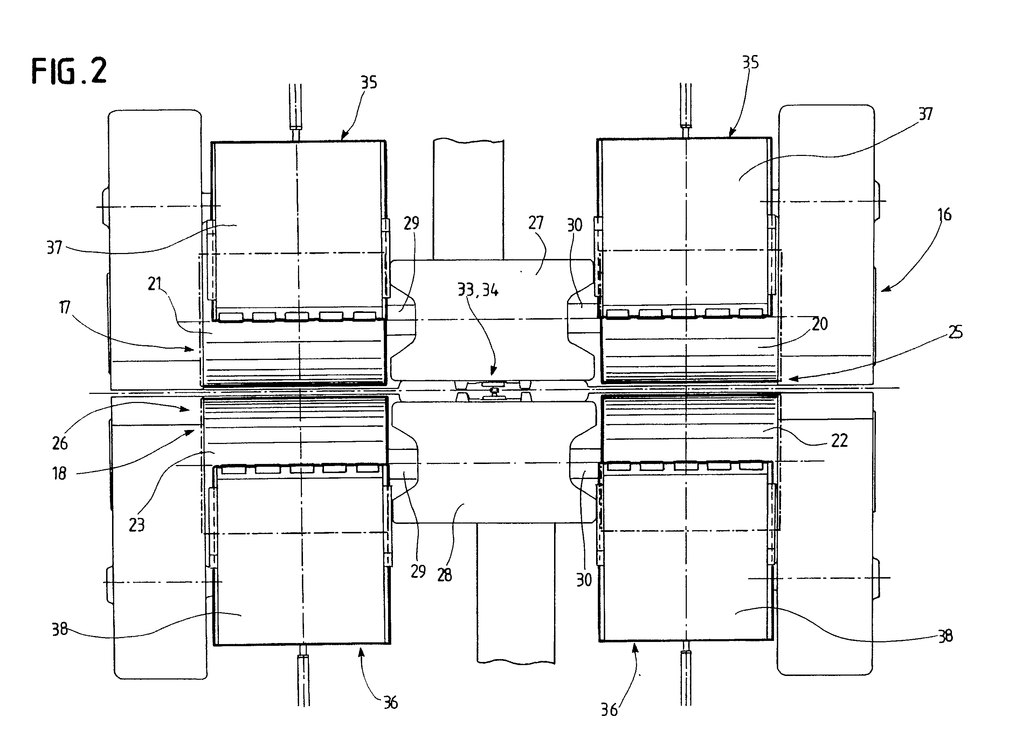

. la figure 2 est une vue simplifiée de dessus, montrant les deux lignes de rouleaux correspondantes composant un même train, tiroirs partiellement fermés ;

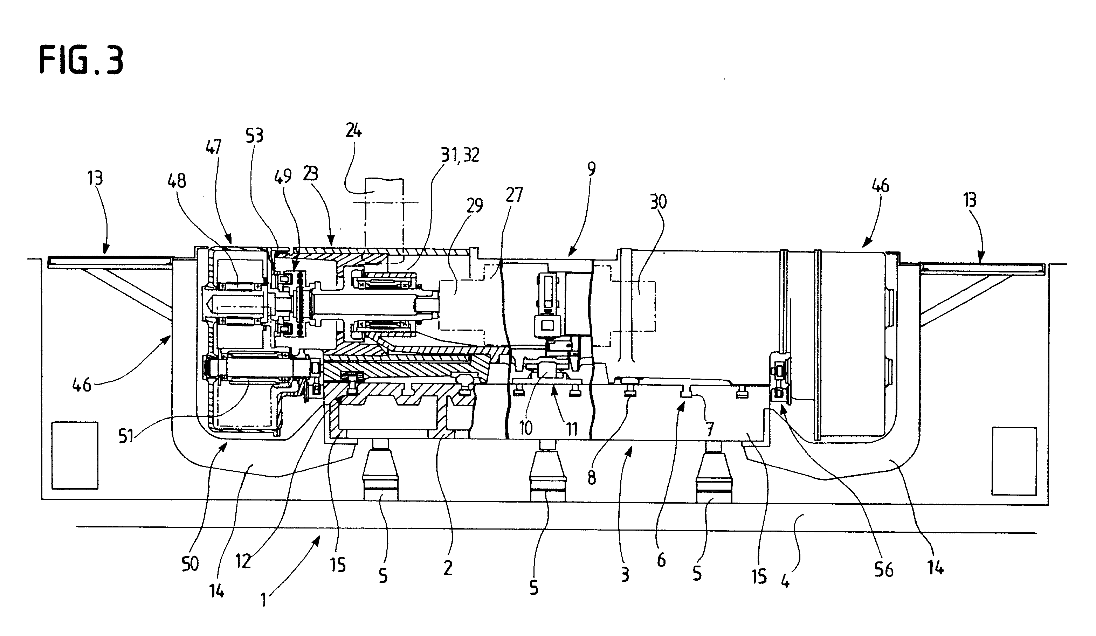

. la figure 3 est une vue composite transversale en demi-coupe pour la partie gauche et en élévation pour la partie droite ;

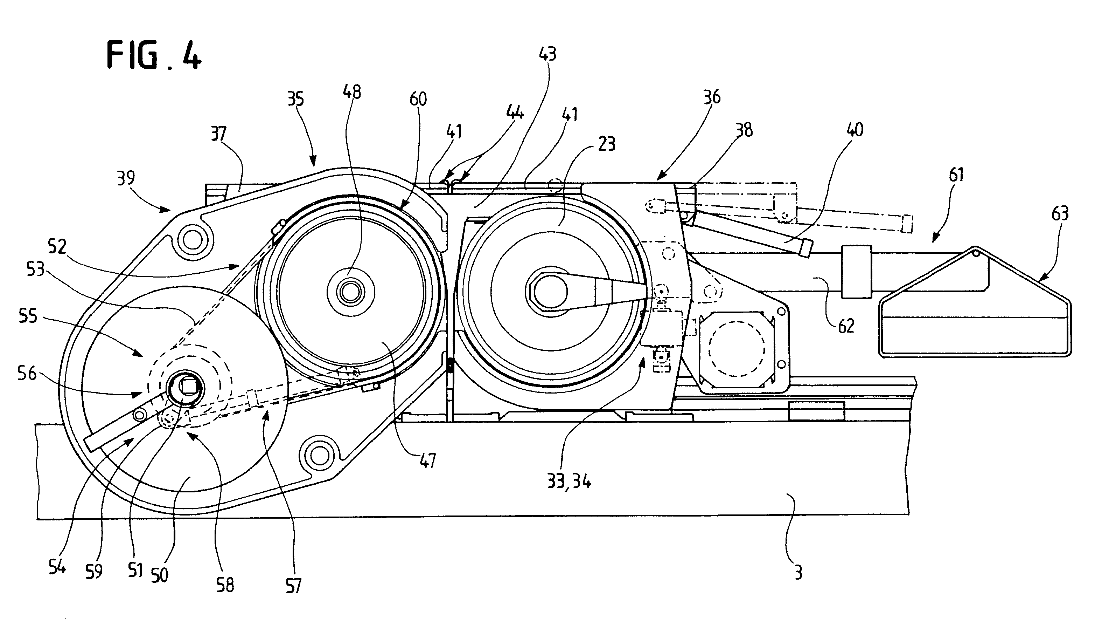

. la figure 4 est une vue en coupe longitudinale d'un groupe de rouleaux montrant les groupes des volants d'inertie ;

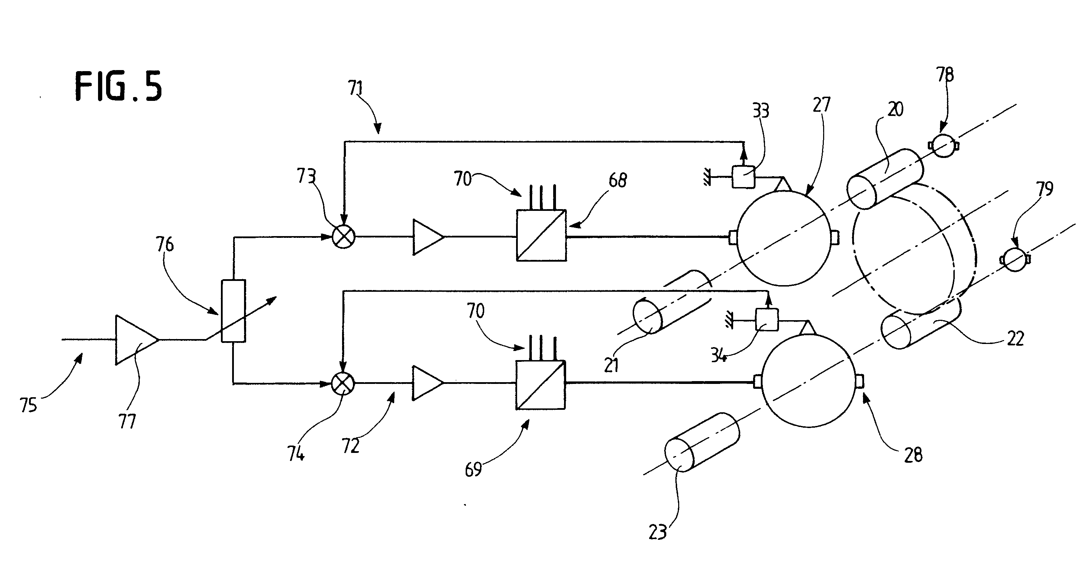

. la figure 5 est un schéma général illustrant la commande d'accouplement électrique de deux lignes de rouleaux d'un même train de rouleaux ;

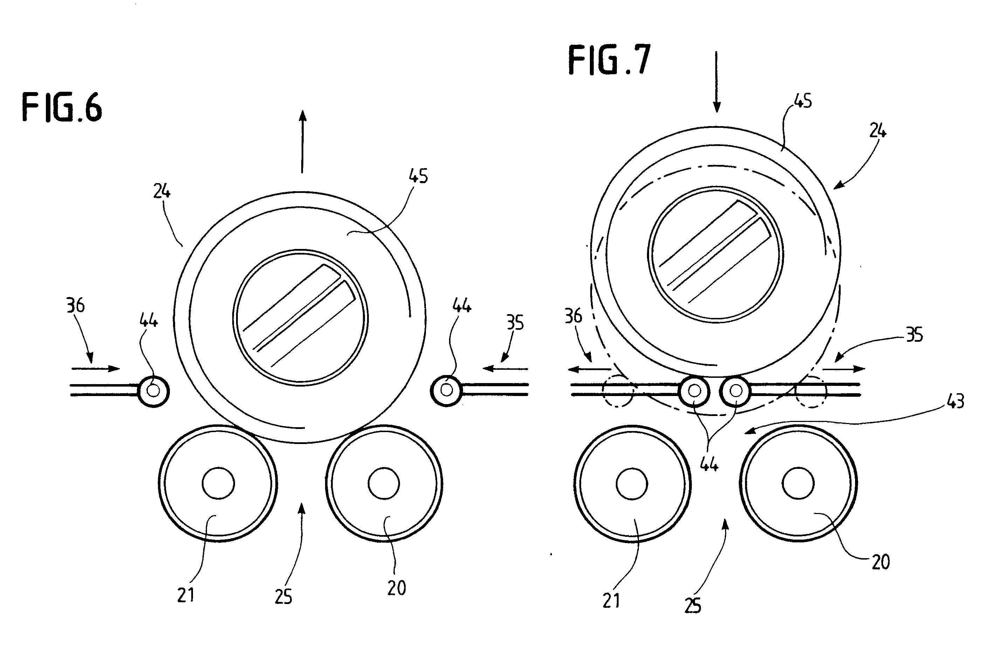

. la figure 6 est une vue schématique en coupe illustrant le travail des tiroirs élévateurs ;

. la figure 7 est une vue schématique en coupe montrant un tiroir élévateur fermé supportant la roue du véhicule ;

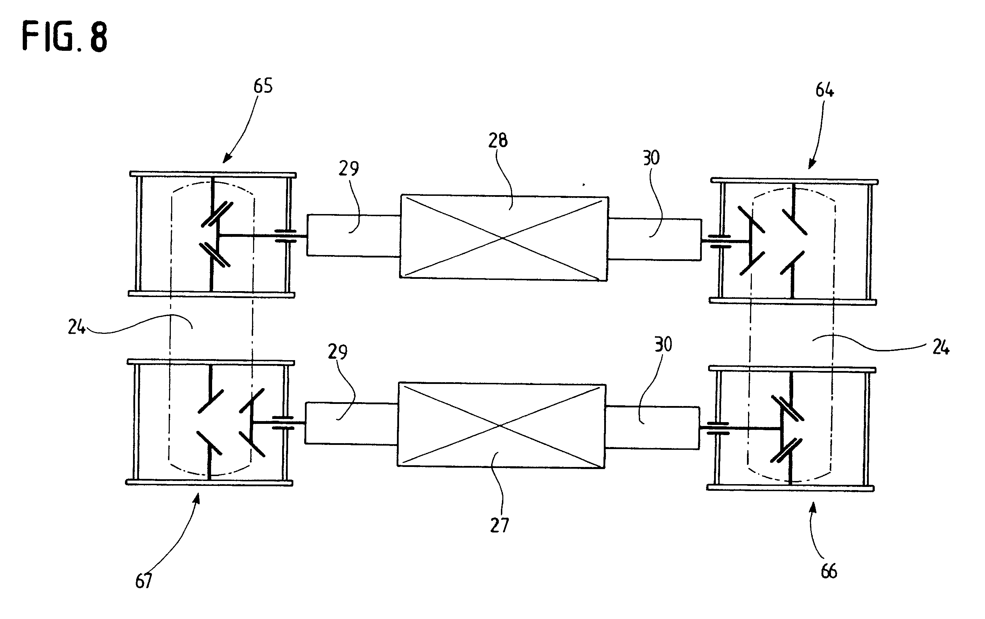

. la figure 8 est un schéma illustrant la configuration d'entraînement pour un même train de rouleaux, destiné à tester les systèmes de freinage dits antiblocage.

De façon générale, en se référant aux figures 1, 2 et 3, le banc à rouleaux selon l'invention comprend les organes et éléments suivants.

Le banc présente une carcasse 1 formant un châssis 2 monté déplaçable sur une plate-forme 3 reposant elle-même sur une fondation 4 par l'intermédiaire de plots réglables tels que 5.

La plate-forme 3 présente en partie supérieure une pluralité de rainures longitudinales telles que 6 à fond de gorge élargi, par exemple du type à profil rectangulaire 7, destinées à recevoir des pattes adaptées 8 pour lesquelles ces rainures jouent le rôle de glissières lors des mouvements de translation longitudinaux à partir d'un ensemble d'entraînement en translation 9 réalisé, par exemple, sous la forme d'un pignon 10 s'engrenant sur une crémaillère longitudinale 11.

La solidarisation à un endroit donné s'effectue par l'intermédiaire de vérins tels que 12 assurant un bridage hydraulique suffisant pour que le châssis 2 fasse corps avec la plate-forme 3.

Cette plate-forme tient lieu de base et de guidage au châssis 2 mais aussi de support pour le maintien du châssis 2 et d'une structure longitudinale supérieure par exemple à ridelles 13 s'appuyant par des jambes de force 14 le long de chaque arête inférieure telles que 15.

Un banc complet comprend deux trains de rouleaux tels que 16 formés chacun de deux lignes de rouleaux respectivement telles que 17 et 18.

Chaque ligne de rouleaux 17 ou 18 possède deux rouleaux correspondants entraînés simultanément tels que 20 et 21, 22 et 23, disposés face à face dans un même alignement d'arbre. Chaque roue telle que 24 du véhicule est supportée par un groupe de rouleaux tels que 25 et 26 formé de deux rouleaux disposés côte à côte dans un même alignement longitudinal correspondant à la ligne de roulage du véhicule.

Chaque train de rouleaux est monté mobile par rapport à la plate-forme 3 par l'intermédiaire de l'ensemble d'entraînement en translation 9 de manière à permettre le réglage d'écartement entre les deux trains de rouleaux correspondant aux trains avant et arrière d'une voiture.

Cette configuration s'avère intéressante dans le cas de véhicules à entraînement intégral sur les quatre roues. Les trains avant et arrière sont alors entraînés et contrôlés. Ce réglage permet l'adaptation du banc à l'empattement du véhicule.

On décrira ci-après la structure d'un train complet de rouleaux correspondant par exemple au train arrière d'une voiture à propulsion. Chaque train de rouleaux s'avère identique ou approchant. Ainsi, l'autre train de rouleaux, par exemple le train avant n'a pas besoin d'être décrit.

Comme indiqué, chaque rouleau, correspondant à une même ligne d'arbre d'entraînement pour un même train de roues du véhicule à contrôler, est appelé "ligne de rouleaux". Ces rouleaux d'une même ligne sont entraînés par un seul moteur 27 ou 28 disposé en position centrale entre les rouleaux correspondants d'une même ligne de rouleaux.

Chaque moteur électrique est du type à courant continu et à un arbre traversant de puissance totale suffisante pour entraîner le train avant ou arrière du véhicule à contrôler à des vitesses dépassant 200 km/h.

L'arbre traversant du moteur électrique sort du bloc moteur par un bout d'arbre court 29 et 30 en communication cinématique avec l'un et l'autre rouleau de la même ligne d'arbre.

Chaque rouleau est monté sur un palier à roulement 31 ou 32 supporté par un bras relié au châssis 2 s'appuyant sur la plate-forme 3.

Une des caractéristiques originales de l'invention consiste en une simplification importante de construction du banc par rapport aux bancs classiques à rouleaux.

On utilise en effet de chaque côté de l'arbre court d'entraînement 29 et 30 le roulement de palier 31 ou 32 de chaque rouleau comme roulement de balance du moteur électrique dont le bloc, monté flottant, est relié par ailleurs au châssis 2 par une jauge de contrainte formant peson 33 et 34 afin de mesurer les couples appliqués à chaque ligne de rouleaux.

Ainsi, chacun des roulements de palier 31 ou 32 de chaque rouleau remplace le roulement supplémentaire de balance existant classiquement en bout d'arbre sur les moteurs électriques montés flottants, chargé de compenser une partie du couple de réaction au couple moteur, l'autre partie actionnant traditionnellement un peson.

Afin d'assurer une sécurité suffisante, on prévoit au niveau de chaque groupe de rouleaux des tiroirs de recouvrement des rouleaux appelés tiroirs élévateurs 35 ou 36.

Il s'agit, pour chaque groupe de rouleaux, de deux volets 37 et 38 coulissant au-dessus des rouleaux sous la forme de plaques se rejoignant approximativement à la verticale de l'intervalle entre les rouleaux.

Les volets coulissent chacun sous l'effet d'un vérin de tiroir 39 et 40 le long de deux glissières horizontales et parallèles 41 et 42 portant et guidant chacune des plaques formant les volets par ses bords longitudinaux.

Ces plaques assurent une première fonction de protection par la fermeture de l'espace libre 43 au-dessus des rouleaux.

Elles remplissent une deuxième fonction. Il s'agit de l'abaissement et de l'élévation de la roue 24 du véhicule destinée à être supportée par les rouleaux.

A cet effet, les plaques comportent chacune sur leur bord frontal une série de galets tels que 44 destinés à entrer en contact avec le pneu 45 de la roue 24 en vue de son extraction de l'espace 43 situé au-dessus des rouleaux ou, à l'inverse, de la pose progressive de chaque roue 24 sur les rouleaux d'un même groupe.

Lorsque les volets 37 et 38 des tiroirs élévateurs 35 et 36 sont fermés, ils constituent un plan-support protecteur et de roulage réalisant la continuité de planéité avec les surfaces voisines.

Lorsque les volets 37 et 38 du tiroir s'effacent par coulissement et s'ouvrent à la manière d'une trappe, les galets 44 supportent le pneu 45 au fur et à mesure de sa descente vers les rouleaux jusqu'à son contact avec ceux-ci.

A l'inverse, lors de la fermeture des volets 37 et 38 se rapprochant l'un de l'autre, la force du contact permanent des galets 44 avec le pneu 45 permet à celui-ci de s'échapper vers le haut, le dégageant de l'espace au-dessus des rouleaux et le remettant dans sa position initiale. De plus, l'espace au-dessus des rouleaux est obturé.

L'inertie du véhicule peut être simulée de deux façons.

Une première simulation agit par voie purement électrique, par un circuit électrique adapté agissant sur la commande de chaque moteur d'entraînement.

Pour certaines applications, cette fonction est remplacée ou doublée par un ensemble mécanique d'inertie 46 formé de plusieurs volants d'inertie entraînés sélectivement par l'arbre moteur de chaque ligne de rouleaux à travers des mécanismes d'embrayage.

Le nombre de volants d'inertie n'est pas limité. Toutefois, dans la pratique un nombre maximal de deux s'avère satisfaisant.

On distingue d'abord un volant d'inertie en ligne 47. Il s'agit d'un volant d'inertie disposé dans l'alignement du bout d'arbre moteur monté sur un roulement 48 et relié cinématiquement à la prolongation dudit bout d'arbre à travers un dispositif d'embrayage 49, par exemple électromagnétique.

On distingue ensuite un volant d'inertie décalé 50 disposé par exemple en dessous du volant en ligne 47, porté par un roulement 51 et entraîné en rotation à partir du rouleau correspondant à travers une liaison cinématique 52 à courroie 53 en état d'accouplement et de désaccouplement par l'intermédiaire d'un dispositif particulier d'embrayage 54.

Ce dernier se compose essentiellement d'un dispositif de tension 55 de la courroie par l'intermédiaire d'un mécanisme de commande à excentrique 56 actionné par un vérin d'embrayage 57 à travers un bras de levier 58 et une came 59 pour rapprocher ou éloigner l'axe de rotation du volant d'inertie de celui de l'arbre moteur.

Un carter de protection mobile 60 enveloppe partiellement la courroie 53 sur sa face extérieure et le long de ses chants de manière à la maintenir dégagée en position de désaccouplement. Ce carter est actionné également par le vérin d'embrayage 57.

Un peson purement mécanique 61 formé d'un bras 62 et d'une nacelle d'extrémité 63 sert à étalonner chaque jauge de contrainte 33 ou 34.

Une variante représentée sur la figure 8 permet de tester les systèmes de freinage du type anti-blocage pour lesquels il s'avère important de vérifier non seulement la qualité de freinage dans le cas d'efforts différents appliqués sur l'une ou l'autre roue d'un même train de roues du véhicule, mais aussi les éventuelles erreurs de branchement du système de freinage et les anomalies de fonctionnement de toute sorte.

Selon cette variante, on monte sur la même ligne de rouleaux, d'un côté, un rouleau fou 64 et, de l'autre côté, un rouleau entraîné comme précédemment tel que 65.

Pour la deuxième ligne de rouleaux du même groupe chargé de supporter et d'entraîner le même train de roues, la configuration est inversée, rouleau entraîné 66 en correspondance avec le rouleau fou 64 et rouleau fou 67 en correspondance avec le rouleau entraîné 65. Ainsi, le rouleau fou devient entraîné et inversement.

Comme indiqué, il s'avère possible de doser les couples par une commande électrique globale pondérée des moteurs électriques.

Les boucles de commande telles que figurant sur le schéma électrique de la figure 5 permettent de réaliser une commande globale ou une commande relative proportionnelle des couples appliqués à chaque rouleau d'une même ligne et donc du même groupe de rouleau.

Comme on le verra ci-après, une boucle superposée permet, à partir d'un couple total imposé, la commande individuelle du couple de chaque moteur selon le rapport proportionnel souhaité entre chacun des couples.

Plus particulièrement et en référence au schéma électrique de la figure 5, les moteurs électriques 27 et 28 de chaque ligne de rouleaux sont alimentés individuellement par un convertisseur réglable 68 et 69 courant alternatif/courant continu à partir du réseau électrique triphasé 70. Ces convertisseurs sont commandés par un montage régulateur de couple, respectivement 71 et 72 pour chaque moteur. Ces montages comprennent chacun un comparateur de signaux 73 ou 74 entre le peson 33 ou 34 propre à chaque moteur faisant office de capteur, par exemple à jauge de contrainte et un signal de référence électrique propre à chaque voie c'est à dire à chaque moteur. Ils commandent les convertisseurs 68 et 69 après amplification.

Ces signaux de référence proviennent d'une référence électrique 75 représentant le couple total divisé proportionnellement par exemple par un potentiomètre 76 après une amplification suffisante 77.

Un circuit d'affichage du couple total est branché à la sortie des pesons.

La vitesse de chaque arbre de chaque ligne est mesurée par une dynamo tachymétrique 78 ou 79 en vue de son affichage et de son contrôle.

L'invention a été décrite ci-dessus en détail. Il est bien entendu cependant que diverses modifications simples, adjonctions, variantes directes, substitutions par des moyens équivalents entrent dans le cadre de la présente protection.

**Revendications**

1. Banc à rouleaux du type à deux rouleaux par roues pour la simulation et le contrôle du comportement routier d'un véhicule, comprenant pour chaque train de roues du véhicule, un train de rouleaux entraîneurs formés chacun de deux groupes de deux rouleaux adjacents, chacun des rouleaux adjacent formant avec son homologue transversalement opposé, une ligne transversale de rouleaux, caractérisé en ce qu'il deux rouleaux opposés d'une même ligne transversale de rouleaux faisant partie de deux groupes transversaux opposés de deux rouleaux sont entraînés individuellement en bout d'arbre par l'arbre d'un même moteur électrique à courant continu monté mécaniquement flottant en position centrale entre les deux rouleaux entraînés, chaque rouleau d'un même groupe de rouleaux étant ainsi monté cinématiquement indépendant du rouleau homologue du même groupe et en ce que les moteurs électriques de chaque ligne de rouleaux sont couplés électroniquement permettant de doser électroniquement pour chaque groupe, le couple appliqué indépendamment l'un de l'autre sur l'un et l'autre rouleau adjacent d'un même groupe de rouleaux entraînant une même roue et en ce que chaque roulement de palier de chaque rouleau est confondu avec le roulement de balance en sortie de chaque bout d'arbre du moteur électrique et en ce que chaque groupe de rouleaux est protégé en partie supérieure par un tiroir de protection des rouleaux et élévateur.

2. Banc à rouleaux selon la revendication 1, caractérisé en ce que le châssis portant un même train de rouleaux est déplaçable le long d'une plateforme par un ensemble d'entraînement en translation.

3. Banc à rouleaux selon la revendication 1, caractérisé en ce que le tiroir élévateur est formé de deux volets coulissant horizontalement au-dessus des rouleaux, actionnés chacun par un vérin de fermeture-ouverture, lesdits volets comportant chacun sur leur bord frontal une série de galets destinés à venir en contact de prise avec le pneu.

4. Banc à rouleaux selon les revendications précédentes, caractérisé en ce qu'il comporte, pour chaque train de rouleaux, un volant d'inertie en bout d'arbre relié cinématiquement audit arbre par un dispositif d'embrayage.

5. Banc à rouleaux selon la revendication 4, caractérisé en ce qu'un volant supplémentaire d'inertie est relié cinématiquement à chaque rouleau par l'intermédiaire d'une courroie et d'un dispositif d'accouplement par excentrique, ladite courroie étant guidée et protégée par un carter de réception à l'état désaccouplé.

6. Banc à rouleaux selon la revendication 1, caractérisé en ce que l'espace inter-rouleau est obturé par un tiroir élévateur (35) ou (36) formé de deux volets coulissants sous l'effet d'un vérin de tiroir chaque volet étant équipé sur son front avant d'une série de rouleaux.

7. Banc à rouleaux selon la revendication 1, caractérisé en ce que l'alimentation électrique de chaque moteur s'effectue par l'intermédiaire d'un convertisseur électrique réglable, commandé par un montage régulateur de couple comprenant un comparateur de signaux entre chaque peson et un signal de référence propre à chaque voie d'alimentation de chaque moteur.

# FIG. 1

EP 0 417 020 A1

FIG.2

EP 0 417 020 A1

# FIG.3

EP 0 417 020 A1

FIG. 4

FIG.5

EP 0 417 020 A1

FIG.6

FIG.7

EP 0 417 020 A1

# FIG. 8

EP 0 417 020 A1

**Office européen
des brevets**

**RAPPORT DE RECHERCHE
EUROPEENNE**

Numéro de la demande

**EP 90 44 0076**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-1 543 183   (A. WYSS et al.)<br>* Page 1, colonne de droite, alinéa 2; figure 1 *<br>- - - | 1 | G 01 M 17/00 |
| A | EP-A-0 246 606   (TECHNISCHER ÜBERWACHUNGSVE-REIN RHEINLAND e.V.)<br>* Page 11, lignes 7-25; figure 5 *<br>- - - | 1 | |
| A | PATENT ABSTRACTS OF JAPAN, vol. 8, no. 82 (P-268)[1519], 14 avril 1984;<br>& JP-A-58 225 341 (MITSUBISHI DENKI K.K.) 27-12-1983<br>* Résumé; figure *<br>- - - | 1 | |
| A | US-A-3 690 165   (G. STURMO et al.)<br>* En entier *<br>- - - - - | 1 | |

| | DOMAINES TECHNIQUES RECHERCHES (Int. Cl.5) |
|---|---|
| | G 01 M 17<br>G 01 L 5 |

Le présent rapport de recherche a été établi pour toutes les revendications

| Lieu de la recherche | Date d'achèvement de la recherche | Examinateur |
|---|---|---|
| La Haye | 03 décembre 90 | VAN ASSCHE P.O. |

CATEGORIE DES DOCUMENTS CITES
X : particulièrement pertinent à lui seul
Y : particulièrement pertinent en combinaison avec un
    autre document de la même catégorie
A : arrière-plan technologique
O : divulgation non-écrite
P : document intercalaire
T : théorie ou principe à la base de l'invention

E : document de brevet antérieur, mais publié à la
    date de dépôt ou après cette date
D : cité dans la demande
L : cité pour d'autres raisons
- - - - - - - - - - - - - - - - - - - - - - - - -
& : membre de la même famille, document
    correspondant